# EUROPEAN PATENT APPLICATION

(11) **EP 0 718 397 A2**
(43) Date of publication of application: **26.06.1996**
(21) Application number: 95500124.3
(22) Date of filing: 11.09.1995
(51) Int. Cl.: C11B 13/00

(54) **Procedure for the purification and development of liquid and solid waste product produced by oil mill**

(30) Priority: 13.09.1994 ES 9401934
(71) Applicant: TRATAMIENTO INTEGRAL DE ALPECHINES BAENA, S.L., E-14850 Baena (Cordoba) (ES)
(72) Inventor: Lara Feria, Antonio c/o E.S.I.T.I. Univ.Valladolid, 47011 Valladolid (ES); Antolin Giraldo, Gregorio c/o E.S.I.T.I., 47011 Valladolid (ES); Peran Gonzalez, Jose Ramon c/o E.S.I.T.I., 47011 Valladolid (ES)

(57) **Abstract**

PROCEDURE FOR THE PURIFICATION AND DEVELOPMENT OF LIQUID WASTE PRODUCTS (ALPECHINES), AND SOLID WASTE PRODUCTS (ORUJOS), PRODUCED AT AN OIL MILL FOR THEIR COMPLETE DEVELOPMENT. The *alpechin* is subjected to a series of processes: accelerated separation of solids (3) obtaining liquid (i) and solid (k); the liquid may pass to the evaporation pools (m), to the liquids conditioning (6) to prepare liquid fertilizers (9), another use is irrigation (a), or to the process of evaporation (8 and 11) to obtain hot water for the oil mill heating (ñ) and condensed water; the concentrated liquid (o) is used to make fodders and/or to obtain poliphenols, sugar; the necessary heat for the evaporation is obtained at a boiler of thermic oil (5), which fuel is the olive seed (g). The solids (k) mixed with the stoned *orujo* (f) are conditioned (7) to the physical reclamation of oil (10), obtaining oil (d) and solids (K) which are used at the composting plant (12) or used to make fodders (13).

## Description

The present report refers to a new procedure for the purification and development of liquid waste product (alpechín), and solid (orujo), produced by an oil mill (almazara) for its thorough exploitation.

The *alpechín* is a stinking liquid waste resulting from the process of obtaining pure olive oil at the oil mills.

Traditionally, the *alpechines* were poured out into the water courses and so it was easy to notice an olive-oil producer area by means of the dark colour as well as the smelly odour of the waters of its streams and rivers, when the oil mills were working.

The *orujo* is a solid waste product resulting from the process of obtaining olive oil at the oil mills.It is transported to its containers (orujeras) where the oil which is inside it is taken out through chemical solvents, and so it is obtained oil from the solid waste product (orujo's oil) and *orujillo* (seed or bone meal).

The scope of this technique is the purification of toxic and pollutant waste products resulting from an oil mill in its working process, and its complete development.

At present, several methods are used to exploit and make use of the constituents from the *alpechín* in order to make cheaper and profitable the process of its removal and purification, but so far, none of them has completely resolved the problem because they are too expensive, and they constitute a partial solution for it, and also they are not industrial procedures by themselves; that's the reason why none of them allows its efficient industrialization, and each case is on account of one or more of the following reasons:
- The impossibility of treating the huge volumes of *alpechín* resulting from a medium size oil mill.
- Unskilled staff working at the oil mills.
- Lack of strength at the operation procedure.
- Inability to operate in a stationary way.
- Other unfauvorable reasons for its industrialization founded in each one of the used methods. For instance: The Evaporation Pools present the following drawbacks:
- Huge areas are needed, and also, they must be next to the oil mills to make cheaper the transport.
- Stinking odours and insects.
- Infiltrations, and therefore a pollutant danger of the aquifers.
- Raising cost of the successive and required enlargements of the area of them.

### Elimination by means of addition to the solid waste product:

Too wet solid waste products, difficult to transport, and with a very expensive processing at the containers (orujeras).

### Irrigation of agricultural land:

Its main drawback is the high salinity of the *alpechín*, and the low pH, which may both cause a very high concentration of salts and acidity in the ground. Besides, its abundance of poliphenols may bring a phitotoxic action on plants' roots.

### Incineration:

It has a very high energetic cost according to the necessity of evaporating great amounts of water and there are also other difficulties:
- It is highly pollutant because it gives off to the atmosphere all the wastes originated at the combustion process.
- Neither the water nor the organic material in the *alpechín* can be re-used.

### Physical-Chemical and Anaerobic-Aerobic Purification:

the main disadvantage of this method is based on the fact that when performing a process of biomethanitation, it is obtained the biogas together with an effluent that still contains 20 per cent of the organic material of the *alpechín*, and with the same colour; therefore further treatments are required to achieve thorough purification. This puts up enormously the cost of the method.

### Protean Biomass Obtaining:

The process for using the *alpechín* as a mean for developing yeasts suitable for feeding, shows the drawback of being stationary, as contrasted with other similar ones which work continuously. In addition, with this procedure it is obtained an homogeneous effluent with a strong antibiotic activity that prevents or hinders its further biodegradation.

### Ultrafiltration and Inverted Osmosis:

These techniques have failed with the *alpechín,* because it contains substances which act as impermeable and hydrorepellents agents which polarize the membranes and don't allow their proper working.

### Thermic Concentration:

This method of purification of alpechines consists in, basically, gathering them through evaporation of most of the water they comprise, and thus a molasses and a stream of distilled water are produced. The *alpechín*, previously preheated, is introduced in an evaporator where it concentrates by means of the living fumes. The problems which arise are the following:
- Necessity of frequent stoppage, which falls upon the decrease of the stationary efficiency of the boiler generating the living fumes. Besides, upkeep costs are too high due to the necessity of eliminating the incrustations of sweet and lime produced at the evaporators, which are in fact the reason of the plant's stoppages, by means of additions of acids or bases.
- Water obtained through concentration of *alpechín*, keeps a pH between 4 and 4.5 and a DBO over 4,000, even though it has been discoloured. As a result, its pollutant effect on the water course is not completely removed; moreover, it can't be re-used at the process because it would increase the degree of acidity of the pure olive oil.
- Due to the acidity of the reclaimed water, and according to the plant operating conditions, every element in contact with the *alpechín* must be elaborated in stainless steel or materials resistant to these operating conditions.
   Today, the two manufacturers of the evaporating plants have introduced some improvements, by adding products to avoid encrusting and non-stick substances which help to extend the operation time without stopping so frequently to clean them. But, by no means they have achieved to eliminate the former disadvantages, and besides, they need to use chemical products. Next, it has been itemized a list of some of the projects of purification of *alpechin* which are now funded by the *Confederación Hidrográfica del Guadalquivir*, and by the *Agencia del Medio Ambiente de la Junta de Andalucía*:
- *Total development and purification of alpechín through obtaining lipoprotean biomass, ultrafiltration, and inverted osmosis. Professor FIESTAS, Instituto de la grasa. Sevilla.*
- *Method for stoning olives before processing.*
- *Physical and Chemical Method. SAEM-PERRICONE System*.
- *Total forced evaporation Method. Fábrica SAN CARLOS S.A.*
- *Improved natural evaporation Method. HBS-400 System. Núcleos de Interfase S.A*.
- *Activated Mud System. Biogenetic S.A*.
- *Evaporation Method of NIRO ATOMIZER*
- "*Casa FERN*Á*NDEZ SARO" Method.*
- *Biodestil Purification Process.*
- *Hydrobomb CM-2000.*

All these funded projects, as well as the methods already used on pilot plant phase, are being tested, and partially successful results have been obtained from some of them. Yet, their industrialization is not feasible because of the reasons above mentioned.

The proposal is, "a new procedure for the purification and exploitation of liquid waste (alpechines) and solid waste (orujos), resulting from an oil mill, for their total development", with a complete use of all the waste (zero waste), since water will be re-used in the oil mill's process, and the solids are mixed with *orujo*, previously stoned or without being stoned; from that mixture it is extracted the oil contained in the *alpechín* and the *orujo*. The remaining solids are used as raw material for organic fertilizers, compost, fodders, etc... and the seed is used as fuel for the energetic contribution to the purification process.

Oil mills or olive oil factories may be classified into three types: of presses, three phases, and two phases. In the first two types the waste is *alpechín* and *orujo*, in the oil mills of two phases the waste is the *alperujo* (muddy waste) . This purification procedure treats all this waste, and the difference between working with *alpechín* and working with *alperujo* is that the latter needs to be pressed mechanically to separate the *alpechín* (liquid) from the *orujo* (solid).

The purpose of the present invention is the purification and total exploitation of all the waste from the oil mills through a combination of physical, chemical, and thermic processes. First of all we proceed to condition the *alpechín* by means of physical and chemical treatments, and then it goes on to a later evaporation at a plant working continuosly. This procedure allows to reclaim the waste, *alpechines* and *orujos*, the oil they drag, and at the same time it allows to obtain two by-products (water and muds from the *alpechín*), which are used for various purposes. The essential advantages of this procedure are the avoidance of environmental pollution, water saving, together with the economic benefits resulting from the re-using of oil, muds from the *alpechín*, etc... Both, the water that constitutes the olive and the water added to the process of oil extraction, are reclaimed and partially recycled to the same procedure. The oil is extracted from the solid concentrate, mud of the *alpechín* and *orujo*, which contains mostly soft tissues of the olive's flesh and water, and the rest is conditioned to make compost, which is used as organic contribution for agricultural land.

The procedure of purification is characterized by the contribution of the following solutions to the oil mill: total removal of the pollutant waste from the *alpechín*; no water consumption from the public mains at the oil mill due to water recycling from the *alpechín*, and even sometimes the possibility of obtaining drinkable water surplus; energetic saving at the oil mill because of the use of the seed as fuel at the purification process, and re-use of the heat from the evaporated *alpechín* for other necessities of the oil mill; heating for wine cellars, hot water for the extraction process, etc...; reclamation of the oil contained in the *alpechín* and *orujo* through physical procedures of centrifugation; use of the solids held in the *alpechín,* together with the *orujo* and another vegetable waste from the area, as organic fertilizers through composting; use as fertilizer the ashes from the boiler, since they contain the mineral elements extracted from the ground by the olive tree; and finally and most important, the total and definitive solution to the most serious ecological problem of the oil producer areas, by sharply reducing costs and by creating the possibility of an *ecological obtaining of pure olive oil*.The two main consequences of this procedure of purification and development are: First, complete absence of waste and second, the recuperation of most of the oil which was lost in the *alpechín* and in the solid waste product (orujo), that's the reason why we increase the production of oil in the oil mills, and as the extraction will be simultaneous and without chemical additives, it will be possible to obtain ecological pure olive oil.

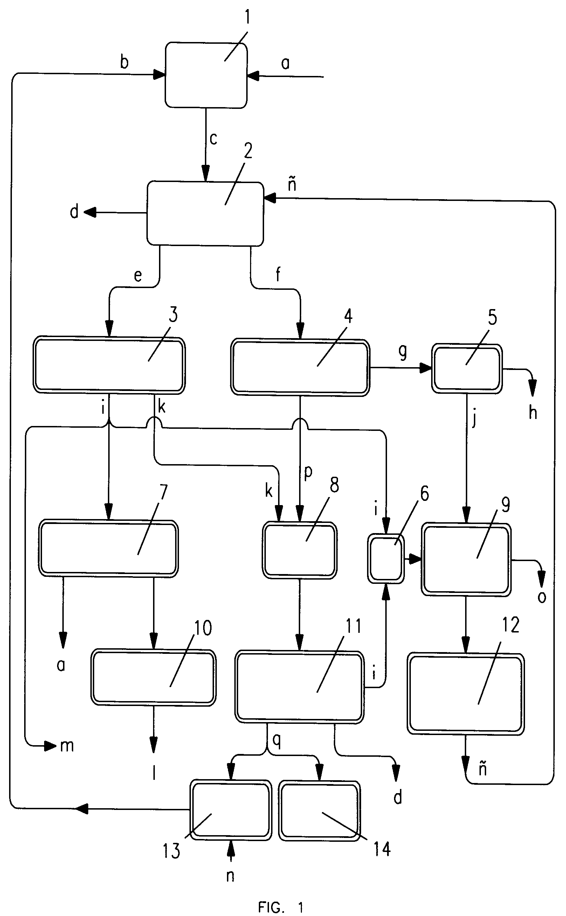

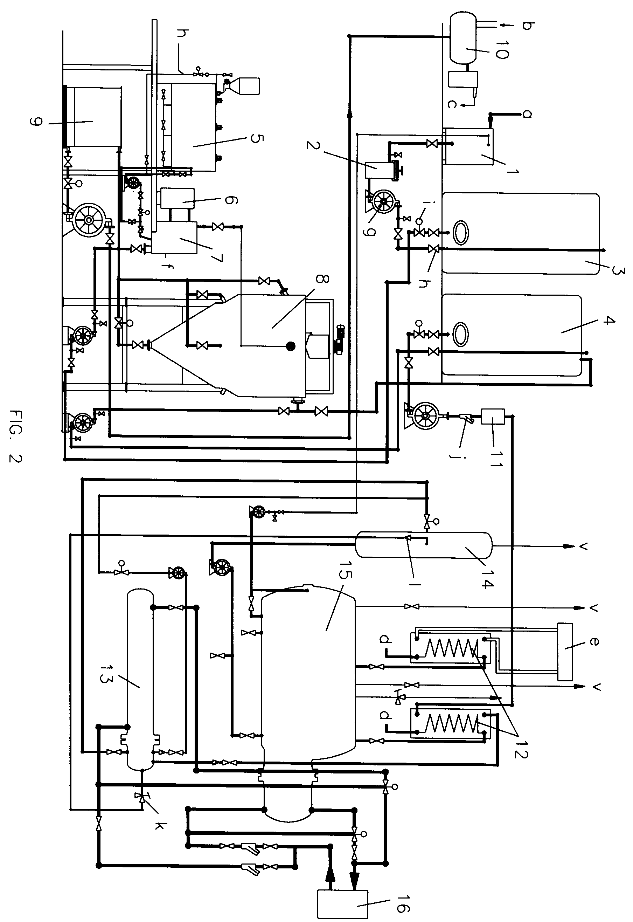

In order to achieve the above mentioned, it is the aim to protect the following procedure of purification and development of the liquid waste product (*alpechín*) and solid waste product (orujo), produced at an oil mill for a complete exploitation, through the application of a set of physical, chemical and thermic processes, which are detailed in figure 1, and a way of realization of the purification procedure showed in figure 2.

The olives (fig 1 ref. c) from the olive grove are milled at the oil mill (fig 1 ref. 2) where the oil is extracted (fig 1 ref. d), the *alpechín* obtained (fig 1 ref. e) goes on to the phase of accelerated separation of solids (fig 1 ref. 3): We proceed, through specific procedures, to the coagulation and floculation of the solids held in the *alpechín* in suspension and/or by ultrasound emission; and the resulting precipitate at this stage is isolated from the rest of the solution through its decanting, forming "the mud of *alpechín*". The liquid of the *alpechín* (fig 1 ref. i) may follow three ways; one to the evaporation pools (fig 1 ref. m) where it is evaporated faster because it lacks solids and oils, another one to a conditioning of liquids (fig 1 ref. 7) to prepare liquid fertilizers (fig 1 ref. 10, 1), and the third one to an evaporation phase (fig 1 ref. 9): The liquids from the *alpechín*, coloured water, once it has been conditioned as indicated, are subjected to evaporation at a plant that works continuously. The evaporation is under atmospheric pressure. Through a stage of sudden partial evaporation previous to the evaporation itself, most of the organic volatiles from the water are removed.

Operating continuously allows to put away the concentrated disolution (fig 1 ref. o) formed at the evaporator, to use it as raw material for animal fodders, reclamation of poliphenols and/or the extraction of chemical products. When the fumes are being condensed, the residual heat is used for the thermic necessities of the oil mill ( fig 1 ref. 12) and finally it supplies hot water (fig 1 ref. g) to the oil mill. As for *orujo* (fig 1 ref. f), the seed is separated (fig 1 ref g) from the flesh (fig 1 ref. p), the seed is used as heater's fuel (fig 1 ref 5), the ashes (fig 1 ref. h) come back to the ground as mineral fertilizer, the flesh (fig 1 ref. p) is mixed with the solids from *alpechín* (fig 1 ref. 8) and are subjected to a process of centrifugation (fig 1 ref. 11) to extract the oil (fig 1 ref. d ), which has been kept almost completely in the solids and in the *orujo.* The solids without oil (fig 1 ref. q) obtained at the oil reclamation stage (fig 1 ref.11), are useful to be used later in a process of composting (fig 1 ref. 13), to make fodders (fig 1 ref 14), or as boiler fuel.

Composting is put into effect by means of a mixture of solids with agricultural waste, essentially as cereal straw, lops, sawdust or the remaining solid waste from the oil mill. The solids may also be conditioned to make animal fodders. All the liquids coming into the evaporator (fig 1 ref. 9) are subjected to roughness elimination (fig 1 ref. 6) making them circulate inside an intense magnetic field, which polarize the salt molecules and avoid their deposition in the pipes and elements they circulate through. The calcium carbonate remains in suspension and is evacuated together with the solid waste which has been removed at the accelerated solids separation stage.

The reference signs used in figure 1 are: 1- Olive grove, 2-Oil mill, 3- Accelerated solids separation, 4- Stoning, 5-Boiler, 6- Roughness elimination, 7- Liquids conditioning, 8-Solids conditioning, 9- Evaporator, 10- Liquid fertilizers preparation, 11- Oil physical reclamation, 12- Interchanging, 13- Composting plant, 14- Fodders manufacturing, a- Irrigation, b- Organic fertilizer, c- Olive, d- Oil, e- Alpecchín, f-Orujo, g- Seed, h- Ashes, i- Liquids from alpechín, j- Heat, k-Solids, 1- Liquid fertilizer, m- Evaporation pools, n-Vegetable waste from the area, ñ- Hot water, o- Concentrate, p-Flesh, q- Solids without oil.

A way of realization of the procedure for purification and total exploitation of the waste products from an oil mill, which is to be protected, consists in the plants detailed and reflected in figure 2. The *alpechín* (a) comes out from the oil mill and goes to the deposit (1) it is passed through the filter (2) and is stored in the main deposit (3), then the next step is the accelerated separation of solids which may be done by mixing in (7) with *alpechín*, floculant and air, or through an ultrasonic transmitter (6), after that, it passes to the decanter (8), the obtained muds or solids are stored in the deposit (9), and then they are mixed with the orujo previously stoned (b) and they are subjected to physical process of centrifugation (10), with the purpose of extracting the oil (c) held in those muds. The coloured liquid (*alpechín* without solids) is obtained from the accelerated separation of solids, stored in the main deposit (4), next stage is the thermic treatment which requires a magnetic treatment of the liquid (11), in order to eliminate the roughness of the coloured water (*alpechín* without solids), and later on it is passed through an interchanging heater (12), a preheater (13), sudden partial evaporation camera (14) and evaporator (15), from which the fumes are condensed at the interchanging heaters (12) and hot water is obtained (e) for the heating of the oil mill, and the *alpechín* is preheated to increase the efficiency of the process, obtaining condensed water (d). The global process is automatic, that is the reason why it is equipped with measure devices, control and caudal regulation, temperature and pressure. The reference signs used at figure 2 are: 1- Initial deposit, 2-Initial filter *alpechín*,3- Main deposit of *alpechín*, 4- Main deposit of *alpechín* without solids, 5- Equipment for the preparation of floculant, 6- Physical floculant: ultrasonic transmitter, 7- Chemical floculant: conical mixer, 8- Decanter, 9- Deposit for collecting muds, 10- Centrifuge to obtain oil, 11- Magnetic equipment to eliminate water roughness, 12-Interchanging heaters, 13- Preheater of *alpechín*, 14- Sudden partial evaporation camera, 15- Evaporator with atmospheric pressure, 16- Boiler of thermic oil with burner of *orujo*, a-*alpechín*, b- *orujo*, c-oil, d- condensed water, e- heating water, f- pressure air, g- bombs of liquids propulsion, h-manuable valve, i- electrovalve, j- filter, k- safety valve, v-fumes escapes.

## Claims

**1)** PROCEDURE FOR PURIFICATION AND DEVELOPMENT OF LIQUID WASTE PRODUCTS (ALPECHINES) AND SOLID WASTE PRODUCTS (ORUJOS), PRODUCED AT AN OIL MILL FOR THEIR COMPLETE DEVELOPMENT, it is characterized by a process called "ACCELERATED SEPARATION OF SOLIDS", which through specific reagents proceeds to coagulation and floculation of the solids helds in the alpechin in suspension and/or by emission of ultrasounds those solids held in the *alpechín* are concentrated. The resulting precipitate at this stage is isolated from the rest of the solution through decanting and floating it, forming the muds of *alpechín*.

**2)** PROCEDURE OF PURIFICATION AND DEVELOPMENT OF LIQUID WASTE PRODUCTS (ALPECHINES) AND SOLID WASTE PRODUCTS (ORUJOS) PRODUCED AT AN OIL MILL FOR THEIR COMPLETE DEVELOPMENT, that according to vindication 1, is characterized by a process called "PHYSICAL RECLAMATION OF OIL", which, once the solids (muds of *alpechín*) from the coloured liquid have been separated at the previous stage, they are mixed with the *orujo* previously stoned or without being stoned and they are subjected to a process of centrifugation to extract the remaining oil which was kept in the solids and in the *orujo*.

**3)** PROCEDURE OF PURIFICATION AND DEVELOPMENT OF LIQUID WASTE PRODUCTS (ALPECHINES) AND SOLID WASTE PRODUCTS (ORUJOS) PRODUCED AT AN OIL MILL FOR THEIR COMPLETE DEVELOPMENT, that according to vindication 1 and 2, is characterized by a process called "ELIMINATION OF THE ROUGHNESS OF THE ALPECHIN", which removes temporary roughness from the liquid of the *alpechín*, making it circulate in an intense magnetic field, which polarizes the salt molecules and avoid their deposition in the pipes and elements they circulate through. Calcium carbonate remains in suspension and it is evacuated together with the solid which is retired at the stage of physical reclamation of oil.

**4)** PROCEDURE OF PURIFICATION AND DEVELOPMENT OF LIQUID WASTE PRODUCTS (ALPECHINES) AND SOLID WASTE PRODUCTS (ORUJOS) PRODUCED AT AN OIL MILL FOR THEIR COMPLETE DEVELOPMENT, that according to vindication 1,2 and 3, is characterized by a process called "EVAPORATION", which makes the solution coming from the previous stages (coloured water) subject to a process of EVAPORATION UNDER ATMOSPHERIC PRESSURE, with a sudden partial evaporation previous to the evaporation itself. The operation is continuous and allows to remove the concentrated solution formed at the evaporator to use it as raw material of animal fodders and reclamation of poliphenols. The fumes obtained are used through interchanging heaters, to satisfy calorific necessities of the oil mill (hot water for the process, machinery heating, wine cellars heating, bays and offices, etc...). The 85 % of water held in the *alpechín* is reclaimed by condensation at interchanging heaters. The necessary energy for the process is obtained using as fuel the *orujo* coming from the oil mill without being treated before, solids from *alpechín* (muds of *alpechín*) produced at the process, or the seed from the orujo previously separated.

**5)** PROCEDURE OF PURIFICATION AND DEVELOPMENT OF LIQUID WASTE PRODUCTS (ALPECHINES) AND SOLID WASTE PRODUCTS (ORUJOS) PRODUCED AT AN OIL MILL FOR THEIR COMPLETE DEVELOPMENT, that according to vindications 1, 2, 3 and 4, is characterized by a process called "TREATMENT OF SOLIDS", in which the solids obtained at the stage of physical reclamation of oil, after having subjected them to a composting process, are used as organic fertilizer. Composting is carried out through the mixture of solids with agricultural waste. These solids, after a conditioning process, are used to make fodders.
